# EUROPÄISCHE PATENTSCHRIFT

(11) **EP 3 453 933 B1**
(45) Veröffentlichungstag und Bekanntmachung des Hinweises auf die Patenterteilung: **25.03.2020**
(21) Anmeldenummer: 17190564.9
(22) Anmeldetag: 12.09.2017
(51) Int. Cl.: F16K 37/00, F16K 27/00

(54) **VENTILKÖRPERELEMENT MIT EINGEBETTETEN SENSOREN**
VALVE BODY ELEMENT WITH EMBEDDED SENSORS
ÉLÉMENT DE CORPS DE SOUPAPE POURVU DE CAPTEURS INTÉGRÉS

(43) Veröffentlichungstag der Anmeldung: 13.03.2019
(73) Patentinhaber: Nova Werke AG, 8307 Effretikon (CH)
(72) Erfinder: STOLL, Philipp, CH-9326 Horn (CH); SPIERINGS, Adriaan, CH-9300 Wittenbach (CH); FERCHOW, Julian, CH-8008 Zürich (CH); KLAHN, Christoph, CH-8125 Zollikerberg (CH); BRÜNGGER, Kurt, CH-8307 Effretikon (CH); NÄGELI, Peter, CH-8307 Effretikon (CH); JUNG, Steffen, CH-9545 Wängi (CH)
(74) Vertreter: Frei Patent Attorneys

(56) Entgegenhaltungen:
- EP-A1- 3 203 126
- DE-A1-102006 062 373
- US-A1- 2017 102 089
- US-A1- 2017 198 822

## Beschreibung

Die Erfindung bezieht sich auf das Gebiet der Ventile. Ein Ventil umfasst einen Durchlass, welcher von einen **Ventilsitz** berandet wird, und ein **Verschlussteil.** Das Verschlussteil ist dazu eingerichtet durch eine Bewegung die Stellung des Ventils zu ändern, d.h. den Durchlass zu verengen oder zu erweitern, also insbesondere den Durchlass zu schliessen oder zu öffnen.

Ein **Magnetventil** ist ein Ventil, welches von einem Elektromagneten betätigt wird. Ein Magnetventil kann zum Beispiel eine, ein Verschlussteil vorspannende Feder sowie eine Spule aufweisen. Die Spule kann dazu eingerichtet sein, dass durch sie geleiteter Strom ein Magnetfeld induziert, wodurch die Federkraft überwunden und so das Verschlussteil bewegt werden kann.

Ein **pilotgesteuertes Ventil** weist ein erstes Ventil, auch **Hauptventil** genannt, und ein zweites Ventil, auch **Pilotventil** genannt, auf, wobei das Hauptventil durch das Pilotventil gesteuert wird. Ein **pilotgesteuertes Magnetventil** kann ein als Magnetventil ausgestaltetes Pilotventil aufweisen. Das Pilotventil kann dazu eingerichtet sein, die Druckverhältnisse am Hauptventil zu steuern. Zum Beispiel können durch eine Änderung der Stellung des Pilotventils die Druckverhältnisse am Hauptventil geändert und dadurch die Stellung des Hauptventils gesteuert werden.

Das Verschlussteil eines Ventils kann z.B. als Kolben oder Membran ausgebildet sein.

Ein Ventil kann zwei oder mehr **Kanäle** aufweisen, durch welche strömungsfähige Stoffe (z.B. Flüssigkeiten oder Gase) geleitet werden können. Die Kanäle können **Eingänge** (bspw. zur Aufnahme von Ventilmechanik oder zur Aufnahme von Anschlüssen) sowie die Eingänge verbindende **Röhren** aufweisen. Ein einfacher Kaltwasserhahn hat zum Beispiel zwei Kanäle: einen **Zufluss**, der an die Hauptwasserleitung angeschlossen ist, und einen **Abfluss** zur Abgabe des Wassers.

Ein Ventil weist einen Ventilkörper auf, durch welchen der Ventilsitz und die Kanäle definiert werden können. Ein Ventilkörper kann ein oder mehrere **Ventilkörperelemente** aufweisen. Die Ventilkörperelemente können dazu eingerichtet sein - nötigenfalls mit anderen Elementen - mindestens einen Kanal zu bilden. Eine Wand eines Ventilkörperelementes kann als **Kanalwand** ausgebildet sein, also zur Bildung eines Kanals eingerichtet sein. Die Kanalwand kann z.B. rohrförmig ausgebildet sein; in diesem Fall definiert das Ventilkörperelement einen Kanal bzw. zumindest einen Teil eines Kanals. Die Kanalwand kann z.B. halbrohrförmig ausgebildet sein und dazu eingerichtet sein, mit einer Kanalwand eines weiteren Ventilkörperelementes einen Kanal zu definieren. Das Ventilkörperelement kann eine **kanalbildende Innenseite** aufweisen; also einen Teil, welcher dazu eingerichtet ist - wenn ein Kanal gebildet ist - mit in dem Kanal strömenden Stoffen direkt im Kontakt zu sein. Wenn die Kanalwand z.B. rohrförmig ausgebildet ist, bildet die Rohrinnenfläche eine kanalbildende Innenseite. Ein Ventilkörperelement kann eine oder mehrere kanalbildenden Innenseiten aufweisen.

Aus dem Stand der Technik sind Ventile und deren Ventilkörperelemente, insbesondere pilotgesteuerte Magnetventile, bestens bekannt. In der industriellen Praxis werden Ventilkörperelemente zumeist mit Hilfe klassischer Produktionsverfahren wie Metallguss und Metallbearbeitung hergestellt. Die klassischen Verfahren erlauben jedoch nicht die Herstellung aller denkbaren geometrischen Formen.

Aus EP3203126A1 ist ein spezielles Ventil für Verwendung in der Luftfahrt bekannt, bei welchem zumindest ein Teil durch einen additiven Herstellungsprozess (engl. *"additive manufacturingprocess*") geformt wurde, zum Beispiel durch Laser-Sintern (engl. *"laser sintering"*), industriellen 3D-Druck (engl. *"industrial 3D printing"*) oder einen sonstigen Prozess, in welchem inkrementelle Mengen von Material kombiniert werden um eine homogene, einheitliche Komponente zu bilden. Durch einen solchen additiven Herstellungsprozess kann die Grösse und die Geometrie des Ventils präzise kontrolliert werden und so ein Ventil mit minimalem Gewicht bei gegebener Stärke geschaffen werden.

US 2017/0102089 A1 zeigt einen durch ein additives Verfahren hergestellten Ventilkörper, wobei ein Teil des Ventilkörpers als Gitterstruktur ausgebildet ist, in welcher ein Sensor zum Detektieren von Lecks oder Vibrationen angeordnet ist.

Es besteht ein Bedarf, Informationen über ein Ventil und insbesondere dessen Schaltstellung bereitzustellen. Bei einem Magnetventil, dessen Öffnung von dem zugeführten Strom abhängt, kann z.B. aus dem zugeführten Strom eine Aussage darüber hergeleitet werden, ob und inwieweit das Ventil angeregt sein sollte. Gerade bei fehlerhaften Ventilen kann dies aber zu Fehleinschätzungen führen, etwa wenn die Bewegung des Ventils blockiert ist. Es ist weiterhin bekannt Sensoren an Anschlüssen von Kanälen eines Ventils anzubringen und so in einer gewissen Distanz von dem Ventil z.B. einen Fluss messen. Solche, distanzierten Sensoren haben aber z.B. den Nachteil, dass Ihre Messung Störeinflüssen unterliegen können und es zu Fehleinschätzungen kommen kann.

Es ist Aufgabe der Erfindung eine verbesserte Kombination, ein verbessertes Ventil und ein verbessertes Verfahren zu deren Herstellung, sowie ein verbessertes Set von Ventilen zur Verfügung zu stellen. Die Erfindung löst diese Aufgabe gemäss den unabhängigen Ansprüchen.

Bei **generativen Fertigungsverfahren,** welche auch als additive Fertigungsverfahren, bezeichnet werden, wird auf der Basis rechnerinterner Datenmodelle aus formlosem (Flüssigkeiten, Gelen/Pasten, Pulver o. ä.) oder formneutralem (band-, drahtförmig, blattförmig) Material mittels chemischer und/oder physikalischer Prozesse ein formfestes Werkstück aufgebaut. Der Aufbau kann schichtweise erfolgen und die **Aufbaurichtung** senkrecht zu den Schichten verlaufen.

Ein bekanntes generatives Fertigungsverfahren ist das sogenannte **selektive Laserschmelzen** (engl. *"Selective Laser Melting"*, abgekürzt auch als *"SLM"* bezeichnet). Dabei wird der zu verarbeitende Werkstoff in Pulverform in einer dünnen Schicht auf einer Grundplatte aufgebracht. Der pulverförmige Werkstoff wird mittels Laserstrahlung lokal vollständig aufgeschmolzen und bildet nach der Erstarrung eine feste Materialschicht. Der Aufbau erfolgt schichtweise. Eine Schicht kann z. B. 15-500 µm, insbesondere ca. 25-50 µm, stark sein. Ein SLM-gefertigtes Werkstück kann eine homogene oder eine selektive (also inhomogene) Dichte aufweisen. Werkstücke mit selektiven Dichten sind mit klassischen Herstellungsverfahren nicht herstellbar. Als Werkstoff für SLM-Herstellungsverfahren kann Metall verwendet werden, wie beispielsweise Edelstahl (z.B. Wnr. 1.4404 nach Norm EN 10027-2 wie zum 31.08.2017 gültig), Edelmetalllegierungen, Aluminium(-legierungen), Titan(-legierungen), Chrom-Kobalt-Molybdän-Legierungen, Bronzelegierungen, Nickelbasislegierungen und/oder Kupferlegierungen.

Ein Aspekt der Erfindung betrifft eine **Kombination**, welche ein **Ventilkörperelement** sowie einen **Sensor** aufweist.

Das **Ventilkörperelement** kann **einstückig** ausgebildet sein (also z.B. nicht aus mehreren, zusammengesetzten Teilen bestehen). Das Ventilkörperelement kann zumindest teilweise durch ein generatives Verfahren generiert sein. Insbesondere kann das Ventilkörperelement **zumindest teilweise durch ein generatives Verfahren schichtweises aufgebaut** worden sein, z.B. durch das oben beschriebene SLM-Verfahren.

Das Ventilkörperelement kann dazu eingerichtet sein, gegebenenfalls mit anderen Elementen, einen Ventilkörper zu bilden. Insbesondere kann das Ventilkörperelement selber einen Ventilkörper bilden. Ein Ventilkörper kann dazu eingerichtet sein, Komponenten eines Ventils aufzunehmen und/oder aufzuweisen. Zum Beispiel kann der Ventilkörper die Kanäle und Ventilsitz definieren und dazu eingerichtet sein, die beweglichen Teile eines Ventils aufzunehmen.

Das Ventilkörperelement kann eine Wand zur Bildung eines Kanals aufweisen. Eine solche soll im folgendem auch Kanalwand genannt werden. Mit anderen Worten kann das Ventilkörperelement einen Teil aufweisen, dessen Oberfläche - nötigenfalls in Zusammenspiel mit anderen Elementen - dazu eingerichtet ist, die Oberfläche eines Kanals eines Ventils zu bilden. Zum Beispiel kann das Ventilkörperelement einen Kanal aufweisen und eine an diesen Kanal angrenzende Wand wäre eine Kanalwand. In einem anderen Beispiel ist das Ventilkörperelement halbrohrförmig ausgebildet, so dass es zusammen mit einem entsprechenden (z.B. ebenfalls halbrohrförmig ausbildeten) Gegenelement einen Kanal bilden kann.

Eine Kanalwand weist mindestens eine **kanalbildende Innenseite** auf, also eine Seite, welche zumindest einen Teil der Innenseite eines Kanals bildet (mit anderen Worten: eine Seite, welche mit einem durch den Kanal strömenden Stoff in Kontakt kommt). Es ist möglich, dass mehrere oder alle Seiten einer Kanalwand als kanalbildende Innenseite ausgebildet sind.

In einem Ventilkörper ist jede Wand welche an einen Kanal angrenzt als Kanalwand ausgebildet. Ein Ventilkörper kann, zumindest im Wesentlichen, nur aus Kanalwänden bestehen. Ein Ventilkörperelement kann allein oder mit anderen Elementen einen Kanal eines Ventilkörpers bilden.

In einigen Ausführungsformen ist mindestens ein Kanal eines Ventilkörperelementes (bzw. eines Ventilkörpers) so ausgebildet, dass er nicht durch eine Bohrung realisierbar ist. Insbesondere kann der Kanal gebogen sein.

In einigen Ausführungsformen ist ein Kanal des Ventilkörperelementes (bzw. eines Ventilkörpers) so ausgebildet, dass er nicht mit klassischen Herstellungsverfahren herstellbar ist. Der Kanal kann so ausgebildet sein, dass er nur mit generativen Herstellungsverfahren herstellbar ist.

In einigen Ausführungsbeispielen kann das Ventilkörperelement einen Ventilsitz aufweisen, oder Teile, welche dazu eingerichtet sind, zusammen mit anderen Elementen einen Ventilsitz zu bilden.

Der **Sensor** kann **in eine Wand**, insbesondere in eine Kanalwand, des Ventilkörperelementes **eingebettet** sein. Mit anderen Worten kann der Sensor in die Wand integriert sein. Insbesondere kann es sein, dass der Sensor nicht aus dem Ventilkörperelement entfernt werden kann ohne nicht mindestens das Ventilkörperelement oder den Sensor zu beschädigen.

In einigen Ausführungsbeispielen weist die Kombination ein Ventilkörperelement und einen Sensor auf, wobei das Ventilkörperelement einstückig ausgebildet ist, das Ventilkörperelement, zumindest teilweise, durch ein generatives Herstellungsverfahren schichtweise aufgebaut worden ist, das Ventilkörperelement eine Wand, beispielsweise eine Kanalwand zur Bildung eines Kanals, aufweist und der Sensor in die Wand eingebettet ist. Beispielsweise kann es sein, dass das Ventilkörperelement eine konventionell hergestellte Grundplatte aufweist, auf welche mittels des generativen Herstellungsverfahrens Strukturen des Ventilkörperelements aufgebaut wurden. Eine solche Mischung aus konventionellen und generativen Herstellungsverfahren bezeichnet man auch als Hybridbauweise.

In einigen Ausführungsbeispielen weist die Wand eine **Kavität** auf, in welche der eingebettete Sensor angeordnet ist. Die Kavität kann z.B. ungefähr in der Grösse des Sensors ausgebildet sein. Zum Beispiel kann die Kavität ein Volumen aufweisen, welches kleiner als das doppelte Volumen des Sensors ist. Der Sensor kann innerhalb der Kavität von einem Füllmaterial umgeben sein. Insbesondere kann das Füllmaterial die Kavität (genauer gesagt den Rest der Kavität) ausfüllen. Der Sensor kann z.B. in der Kavität von einer Paste (z.B. einer Wärmeleitpaste) umgeben sein Der Sensor kann mit einem Harz (z.B. einem Epoxidharz) in der Kavität fixiert sein. Insbesondere kann die Kavität mit Harz ausgefüllt sein..

In einigen Ausführungsformen ist der eingebettete Sensor in einer Kavität einer Kanalwand angeordnet und die Kavität so ausgebildet, dass im Ventilbetrieb die durch den Kanal strömenden Stoffe nicht in die Kavität eindringen können. Optional kann das Ventilkörperelement eine kanalbildende Innenseite aufweisen und die Kavität von einer kanalbildenden Innenseite des Ventilkörperelementes getrennt sein; also nicht mit dem Kanal bzw. der kanalbildenden Innenseite verbunden sein. Durch die Trennung der Kavität zur Einbettung des Sensors von den Kanälen kann einer möglichen Beschädigung des Sensors durch in dem Ventil strömende Stoffe vorgebeugt werden.

Der Sensor kann ein kabelgebundener Sensor sein, also zur Stromversorgung und/oder zur Datenübertragung mit einem Kabel verbindbar sein. Der Sensor kann mit einem Kabel verbunden sein.

Der Sensor kann zur kabellosen Übertragung von Daten eingerichtet sein. Der Sensor kann zum kabellosen Empfang von Daten eingerichtet sein. Der Sensor kann zum kabellosen Energieempfang eingerichtet sein. Der Sensor kann eine Spule aufweisen, insbesondere kann der Sensor dazu eingerichtet sein über eine Spule Daten zu übertragen, Daten zu empfangen und/oder Energie zu empfangen.

In einigen Ausführungsformen ist die Kavität eine abgeschlossene Kavität. Mit anderen Worten ist die Kavität vollständig von dem Ventilkörperelement umschlossen. Zum Beispiel kann ein eingebetteter Sensor, welcher Mittel zur kabellosen Übertragung von Daten aufweist, in einer abgeschlossen Kavität angeordnet sein. Der Sensor kann zudem Mittel zum kabellosen Empfangen von Daten und/oder Energie aufweisen.

In einigen Ausführungsformen ist die Kavität eine nicht-abgeschlossene Kavität. Mit anderen Worten: die Kavität ist nicht vollständig von dem Ventilkörperelement umschlossen. Zum Beispiel kann sich eine Kabelzuführung an die Kavität anschliessen. Ein in der Kavität eingebetteter Sensor kann an ein Kabel angeschlossen sein. Das Kabel kann durch die Kabelzuführung geführt sein. Das Kabel kann dazu eingerichtet sein, den Sensor mit einem Objekt ausserhalb des Ventilkörperelementes zu elektrisch zu verbinden. Insbesondere kann der Kabelkanal (und damit die Kavität) mit einer äusseren Oberfläche (mit anderen Worten: einer Oberfläche, welche dazu eingerichtet ist, in dem Ventilkörper aussen angeordnet zu sein, also nicht mit in den Kanälen des Ventils strömenden Stoffen in Kontakt zu stehen) des Ventilkörperelementes verbunden sein. Das Kabel kann zur Übertragung von Daten und/oder zur Energiespeisung des Sensors eingerichtet sein. Die Kabelzuführung kann ein Einbetten kabelgebundener Sensoren erlauben. Die Kabelzuführung kann enger als der in der Kavität angeordnete Sensor ausgebildet sein (mit anderen Worten: so, dass der Sensor nicht durch die Kabelzuführung geführt werden kann). Die Kabelzuführung kann so ausgebildet sein, dass sie nicht durch eine Bohrung realisierbar ist. Insbesondere kann die Kabelzuführung gebogen sein. Die Kabelzuführung kann so ausgebildet sein, dass sie nicht mit klassischen Herstellungsverfahren herstellbar ist. Die Kabelzuführung kann so ausgebildet sein, dass sie nur mit generativen Herstellungsverfahren herstellbar ist.

In einigen Ausführungsformen ist die Kavität so ausgebildet, dass sie nicht durch eine Bohrung realisierbar ist. Insbesondere kann die Kavität gebogen sein.

In einigen Ausführungsformen ist die Kavität so ausgebildet, dass sie nicht mit klassischen Herstellungsverfahren herstellbar ist. Die Kavität kann so ausgebildet sein, dass sie nur mit generativen Herstellungsverfahren herstellbar ist.

In einigen Ausführungsformen ist der eingebettete Sensor weniger als 1.5 mm, insbesondere weniger als 1 mm, weiter insbesondere weniger als 0.5 mm, von einer kanalbildenden Innenseite des Ventilkörperelementes entfernt angeordnet. Ein nahe des Kanals angebrachter Temperatursensor kann z. B. eine präzisere Temperaturmessung und/oder eine schnellere Messung einer Temperaturänderung ermöglichen, und somit verlässlicher und/oder schneller Informationen liefern.

In einigen Ausführungsformen ist die Wand (z.B. eine Kanalwand), in welche der Sensor eingebettet ist, 3 mm oder weniger, insbesondere 2 mm oder weniger, stark. Insbesondere können alle Kanalwände des Ventilkörperelementes 3 mm oder weniger, insbesondere 2 mm oder weniger, stark sein. Dünne Wände können mit weniger Material aufgebaut werden und können - gerade bei hohen Materialkosten, wie sie bei generativen Herstellungsverfahren oft der Fall sind - kostengünstiger produziert werden. Zudem können dünnere Wände Gewichtseinsparungen ermöglichen. Ausserdem kann weniger Material zu weniger Wärmekapazität des Ventilkörpers führen, wodurch eine schnellere und/oder präzisere Temperaturmessung möglich sein kann und/oder was zu einer geringeren Erwärmung oder Abkühlung eines durchströmenden Mediums führen kann.

Der eingebettete Sensor kann als Temperatursensor ausgebildet sein und z.B. ein NTC-Element und/oder ein PTC-Element aufweisen. Ein an einem Ventilabfluss angeordneter Temperatursensor kann durch eine Temperaturveränderung Rückschlüsse darauf erlauben, ob und wieweit ein Ventil geöffnet ist. Dazu kann es sinnvoll sein einen Temperaturmessfühler vor und einem Temperaturmessfühler nach einem Ventilsitz anzuordnen und durch einen Vergleich der gemessenen Temperaturen (also durch den Temperaturgradienten über den Ventilsitz) auf die Stellung des Ventilverschlusses und/oder die Flussrate zu schliessen.

Der eingebettete Sensor kann als Hall-Sensor ausgebildet sein, also dazu eingerichtet sein, mittels des Hall-Effekts ein Magnetfeld zu messen. Der Hall-Sensor kann beispielsweise eine Position eines in einem Ventilverschluss (z.B. eines Haupt-und/oder eines Pilotventils) angeordneten Magneten bestimmen und so Rückschlüsse auf die Ventilstellung ermöglichen.

Der eingebettete Sensor kann als Drucksensor ausgebildet sein und z.B. ein PiezoElement, einen Dehnungsmessstreifen und/oder ein Element zur Messung mechanischer Spannung aufweisen. Der Drucksensor kann zum Beispiel an einem Ventilabfluss angeordnet sein. Der Drucksensor kann insbesondere dazu eingerichtet sein, dass durch die von ihm gemessenen Druckverhältnisse im Ventilabfluss auf die Ventilstellung Rückschlüsse gezogen werden können.

In einigen Ausführungsbeispielen kann die Kombination einen oder mehr, insbesondere zwei oder mehr, eingebettete Sensoren aufweisen.

In einigen Ausführungsbeispielen können zwei Sensoren an unterschiedlichen Wänden (insbesondere Kanalwänden) des Ventilkörperelementes angeordnet sein, wobei die beiden unterschiedlichen Wände dazu eingerichtet sind, in einem Ventil auf unterschiedlichen Seiten eines Ventilsitzes angeordnet zu sein. Zum Beispiel kann ein erster Sensor an einer Wand eines Zuflusses und ein zweiter Sensor an einer Wand eines Abflusses angeordnet zu sein.

Zwei oder mehr eingebetteten Sensoren können von derselben Art sein (z.B. zwei Temperatursensoren) oder von verschiedener Art sein (z.B. ein Temperatur- und ein Hall-Sensor). Mehrere Sensoren können es ermöglichen die Messergebnisse so die gewonnen Informationen zu vergleichen. Unterschiedliche Arten von Sensoren können sich gegenseitig kontrollieren und so die Verlässlichkeit der gewonnenen Information erhöhen.

Ein weiterer Aspekt der Erfindung betrifft ein **Ventil** aufweisend eine der in diesem Text beschriebenen Kombinationen aus einem Ventilkörperelement und einem darin eingebettete Sensor. Das Ventil weist darüber hinaus einen Ventilsitz, einen Ventilverschluss und zwei oder mehr Kanäle auf. Das Ventil ist dazu eingerichtet, durch ein Schliessen des Ventilsitzes mit dem Ventilverschluss, mindestens einen ersten Kanal von mindestens einem zweiten Kanal zu trennen. Das Ventil kann als pilotgesteuertes Ventil, insbesondere als pilotgesteuertes Magnetventil ausgebildet sein.

In einigen Ausführungsbeispielen weist der Ventilverschluss einen Magneten auf. Der eingebettete Sensor kann als Hall-Sensor ausgebildet sein und dazu eingerichtet sein eine Position des Magneten zu erfassen. Der Magnet kann z.B. in einem Ventilverschluss eines Hauptventils oder eines Pilotventils angeordnet sein.

In einigen Ausführungsformen ist ein erster eingebetteter Sensor an einem ersten Kanal angeordnet und ein zweiter eingebetteter Sensor an einem zweiten Kanal angeordnet. Der erste Kanal und der zweite Kanal können auf unterschiedlichen Seiten des Ventilsitzes angeordnet sein, also durch den Ventilverschluss voneinander trennbar sein. Wenn z. B. die beiden eingebetteten Sensoren dieselben (oder ähnliche) Parameter erfassen, kann durch den Vergleich der Messwerte aus einem Zufluss und einem Abfluss auf die Ventilstellung und/oder auf den Fluss über den Ventilsitz Rückschlüsse gezogen werden. Zum Beispiel können beide Sensoren zur Erfassung einer Temperatur eingerichtet sein. Bei geschlossenem Ventil können die beiden gemessenen Temperaturen unterschiedlich sein, und bei geöffnetem Ventil können die beiden gemessenen Temperaturen ähnlich sein. Durch einen Vergleich der beiden gemessenen Temperaturen kann darauf geschlossen werden, ob das Ventil geöffnet oder geschlossen ist. Eine solche, temperaturbasierte Stellungsmessung kann vor allem dann vorteilhaft sein, wenn die Temperatur des, durch das Ventil geleiteten Stoffes von der Umgebungstemperatur verschieden ist, wie es z.B. bei Wasserstofftankstellen der Fall sein kann, in welchen der Wasserstoff z.B. bei einer Temperatur von ca. -40°C bis -45°C geleitetet werden kann. Für eine temperaturbasierte Ventilstellungsmessung kann es vorteilhaft sein, wenn der Temperatursensor möglichst nahe an dem jeweiligen Kanal angeordnet ist, also z.B. weniger als Ventil 1 mm von dem Kanal entfernt angeordnet ist. Für eine temperaturbasierte Stellungsmessung kann es vorteilhaft sein, wenn zumindest einer der Temperatursensoren (z.B. der am Abfluss) nahe an dem Ventilsitz angeordnet ist. Es gibt Stoffe welche beim Strömen durch eine Drossel (z.B. einem Ventilsitz) ihre Temperatur ändern. So steigt z.B. bei Wasserstoff die Temperatur beim Durchfluss durch eine Drossel an. Durch (z.B. kurz) vor und (z.B. kurz) nach einem Durchlass eines Ventilsitzes angeordnete Temperatursensoren, kann eine bei Durchfluss entstehende Wärmeänderung erkannt werden und so auf die Ventilstellung geschlossen werden. Durch eine Erfassung des Temperaturgradienten über den Ventilsitz kann auch die Flussstärke ermittelt werden.

Zusätzlich zu den eingebetteten Sensoren, kann das Ventil auch nicht eingebettete Sensoren aufweisen. So kann z.B. ein Drucksensor auf klassische Art in das Ventil eingeschraubt sein. Die Messungen eingebetteter und nicht eingebetteter Sensoren können miteinander verglichen und/oder kombiniert werden (z. B. für Plausibilitätskontrollen).

Das Ventil kann Sensoren aufweisen, welche in den Kanälen angeordnet sind, also direkt mit einem durchströmenden Medium in Kontakt kommen können. In den Kanälen angeordnete Sensoren können kabelverbunden oder kabellos ausgebildet sein.

Eingebettete Sensoren können ein Design von Ventilen ohne sichtbare und ggf. störende Kabel erlauben. Ein Ventil ohne sichtbare Kabel kann z. B. weniger störanfälliger sein. An einen Sensor angeschlossene Kabel können in dem Ventilkörper eingebettet sein.

Das Ventilkörperelement und/oder das Ventil können Röhren für ein Temperaturmanipulationssystem, insbesondere für ein Heiz- und/oder ein Kühlsystem, aufweisen. Die Röhren des Temperaturmanipulationssystems können zumindest an Teilen der Kanäle in dem Ventilkörperelement und/oder dem Ventil angeordnet sein und diese z. B. umgeben und/oder umlaufen. Ein Heizsystem kann es ermöglichen z. B. bei kalten Umgebungstemperaturen eine Beschädigung des Ventils durch Wasserexpansion vorzubeugen. Ein Kühlsystem kann z.B. in einer Wasserstoff-Tankstelle verwendet werden und dazu eingerichtet sein, einer Erwärmung des vorher gekühlten Wasserstoffes im Ventil entgegenzuwirken. Die Temperatur in einem oder mehreren Kanälen des Ventils und/oder Röhren des Temperaturmanipulationssystems kann durch eingebettete Temperatursensoren erfassbar sein. So kann z.B. beim Verlassen eines bestimmten Temperaturintervalls das Temperaturmanipulationssystem (z.B. automatisch oder per Fernkontrolle) aktiviert werden und so das Ventil und/oder darin fliessende Stoffe aufgeheizt bzw. abgekühlt werden.

In einigen Ausführungsbeispielen weist das Ventilkörperelement bzw. der Ventilkörper ein bionisches Design auf. Ein bionisches Design kann bezüglich eines oder mehrerer Parameter optimiert sein, beispielsweise mit Bezug auf die Festigkeit und/oder die Strömung. Zum Beispiel kann das bionische Design dazu optimiert sein, ein minimales Gewicht bei einer gegebenen Standhaftigkeit (z.B. bei einem gegebenen Innendruck im Ventil) aufzuweisen. Die Optimierung kann unter Erfüllung von Nebenbedingung erfolgten, beispielsweise bei einer gegebenen Geometrie und/oder Position der Eingänge des Ventils. Bionische Strukturen können eine Leichtbauweise ermöglichen, wodurch die Ventile z. B. in der Luft- und Raumfahrttechnik einsetzbar sein können.

In einigen Ausführungsformen weist das Ventilkörperelement bzw. der Ventilkörper flies sende Übergänge auf.

In einigen Ausführungsformen ist das Ventilkörperelement bzw. der Ventilkörper so ausgebildet, dass an einer Stelle, an der sich bei Betrieb des Ventils eine grössere Spannung ausbildet, mehr Material angeordnet ist (z. B. eine dickere Wandstärke aufweist) als an einer Stelle, an der sich bei Betrieb des Ventils eine niedrigere Spannung ausbildet. Insbesondere kann Ventilkörperelement bzw. der Ventilkörper so ausgebildet, dass an allen Stellen der Kanälen im Wesentlichen dieselben Spannungsverhältnisse (also Wandstabilität relativ zur Spannung) herrschen. Zum Bespiel können die jeweilige Wandstärken an die jeweiligen Spannungen angepasst werden. Dadurch kann mit minimalen Materialeinsatz eine maximale Stabilität erreicht werden.

Das Ventil kann ein Rückschlagventil aufweisen, welches beispielsweise dazu eingerichtet sein kann als Überschussventil zu fungieren.

Ein weiterer Aspekt der Erfindung betrifft ein **Set** aufweisend zwei oder mehreren Ventilkörpern, zum Beispiel aufweisend die in diesem Text beschriebenen Ventilkörperelemente mit darin eingebetteten Sensoren. Jeder der Ventilkörper des Sets weist eine Grundplatte mit identischer Geometrie (also mit derselben dreidimensionalen Form und denselben Abmessungen) auf. Die Grundplatte muss nicht notwendigerweise die Form eines Quaders aufweisen, sondern kann als Grundeinheit beliebiger Form ausgebildet sein kann. Auf der jeweiligen Grundplatte sind die jeweiligen Ventilkörper, zumindest teilweise, durch ein generatives Herstellungsverfahren aufgebaut. Jeder der Ventilkörper weist dieselbe Anzahl von Eingänge auf. Jeder der Ventilkörper kann vier oder mehr Eingänge aufweisen, z.B. einen Eingang für ein Pilotventil, einen Eingang für ein Hauptventil sowie zwei oder mehr Eingänge für Kanäle, welche als Zu- oder Abflüsse eingerichtet sein können. Die Eingänge sind auf allen Ventilkörpern eines Sets gleich ausgelegt: Sie befinden sich (relativ zur Grundplatte und relativ zueinander) an denselben Positionen und weisen dieselben Geometrien (also dieselben dreidimensionalen Formen und dieselben Abmessungen) auf. Die Ventilkörper des Sets unterscheiden sich jedoch in der Art wie die Eingänge miteinander verrohrt, also mit Röhren/Kanälen miteinander verbunden, sind. Die Röhren für die unterschiedliche Verrohrung können durch ein generatives Herstellungsverfahren aufgebaut worden sein. Zum Beispiel können die Ventilkörper jeweils sechs Eingänge aufweisen, von denen z. B. vier für Kanäle vorgesehen sein können. Die unterschiedlichen Ventilkörper eines Sets können eine unterschiedliche Anzahl an Zuflüssen und Abflüssen aufweisen. In einem Beispiel mit vier Eingängen für Kanäle könnte ein erster Ventilkörper drei Zuflüsse sowie einen Abfluss aufweisen; und ein zweiter Ventilkörper einen Zufluss sowie drei Abflüsse aufweisen. Ein erster und ein zweiter Ventilkörper können auch beide dieselbe Anzahl an Zu-und Abflüssen ausweisen und trotzdem unterschiedlich verrohrt sein. Z.B. kann in einem ersten Ventilkörper ein erster und ein zweiter Eingang als Zufluss ausgebildet sein; und in einem zweiten Ventilkörper nur der erste und ein dritter Eingang als Zufluss ausgebildet sein. Die unterschiedlichen Ventilkörpers des Sets können z.B. nach demselben CAD-Basismodell (Position und Geometrie der Eingänge) mit nur leichten individuellen Anpassungen (für die Verrohrung) mittels einem generativen Herstellungsverfahren gefertigt werden. Die identische Form und Platzierung der Eingänge kann es erlauben bei einem geplanten Wechsel des Zu-/Ableitung-Schemas lediglich das Ventil auszutauschen, ohne die Schnittstellen des Systems modifizieren zu müssen. Auch können die verschieden verrohrten Ventilkörper z. B. durch dasselbe CNC-Bearbeitungsprogramm bearbeitet werden.

Ein Ventilkörper mit drei oder mehr Eingängen kann es z. B. erlauben auf dem Ventil nach-/vorgelagerte Verzweigungsstücke (z. B. T-Stücke) verzichten zu können und Platz zu sparen. Auch können z. B. die Anzahl der Dichtstellen und damit der potenziellen Leckage-Stellen reduziert werden, wodurch z. B. Kosten gespart und/oder der Aufwand beim Aufbau reduziert werden können.

Ein oder mehrere Kanäle eines Ventilkörpers (bzw. eines Ventilkörperelementes) können doppelwandig ausgebildet sein. Die Doppelwandigkeit kann zusätzliche Sicherheit gegen Bersten bzw. Leckage des Hauptkanals bieten. In eine Doppelwand können auch den Kanal umschliessende Röhren eines Temperaturmanipulationssystems eingebaut werden, welche sich beispielsweise um den Kanal herum winden können.

Das Einbetten eines Sensors in eine, durch ein generatives Herstellungsverfahren aufgebaute Wand eines Ventilkörperelementes war bislang nicht möglich. Denn bei den entsprechenden generativen Herstellungsverfahren entstehen Probleme, welche dem Einbetten des Sensors entgegenstehen. Wenn z.B. ein metallisches Aufbaumaterial verschmolzen wird, kann die verwendete Energie so gross sein, dass diese den Sensor beschädigen kann. Wenn beispielweise ein Sensor in einem Stadium eines SLM-Prozesses in eine Wand eingesetzt wird und der SLM-Prozess dann fortgesetzt wird, würde der Laserstrahl den Sensor schmelzen. Deswegen wurden bislang keine Werkstücke mit eingebetteten Sensoren mit Hilfe solcher hochenergetischen Verfahren aufgebaut.

Durch eine neu entwickelte **Herstellungsmethode** ist der generative Aufbau (z.B. mittels eines SLM-Verfahrens) eines Ventilkörperelementes für Ventile mit eingebetteten Sensoren nun möglich.

In einigen Varianten zur Herstellung eines Ventilkörperelementes mit eingebettetem Sensor werden zumindest Teile des Ventilkörperelementes durch ein generatives Herstellungsverfahren schichtweise aufgebaut. Dabei wird eine Kavität zur Aufnahme des Sensors in einer Wand ausgelassen. Die Kavität wird in Aufbaurichtung mit einem Vordach versehen, welches breit genug ist den Sensor darunter zu verstecken (also so ausgebildet ist, dass ein der Kavität angeordneter Sensor in Aufbaurichtung geschützt ist).
Die Kavität kann so ausgebildet sein, dass aus der zur Aufbaurichtung entgegengesetzten Richtung (z. B. von "oben") noch in die Kavität eingegriffen werden kann (z.B. von "schräg oben"). Das Vordach kann zum Beispiel als wenige Aufbauschichten dicke Decke oder keilförmig ausgebildet sein. Die Kavität mit Vordach kann als, im Vergleich zur Aufbaurichtung, schräg (z.B. 40° bis 50° zur Aufbaurichtung) abfallender Stollen ausgebildet sein. Neben dem Vordach kann eine in Aufbaurichtung offene Öffnung (zum Eingreifen in die Kavität aus der zur Aufbaurichtung entgegengesetzten Richtung) ausgelassen werden.
Wenn das Vordach ausgebildet ist, wird der schichtweise Aufbau unterbrochen. Aus der Kavität wird das pulverförmige Restmaterial zumindest teilweise abgesaugt und der Sensor in die Kavität eingesetzt, so dass der Sensor vollständig unter dem Vordach versteckt ist; der Sensor also z.B. durch einen senkrechten Blick aus der entgegengesetzten Richtung zur Aufbaurichtung (z. B. von "oben") nicht mehr gesehen werden kann. Optional kann der nicht von dem Sensor ausgefüllte Teil der Kavität mit einem Füllmaterial wie einer Paste oder einem Harz ausgefüllt werden. Danach wird das generative Herstellungsverfahren fortgesetzt, und die Kavität in Aufbaurichtung (z. B. nach "oben") hin geschlossen. Da der Sensor in Aufbaurichtung durch das Vordach geschützt ist, ist der Sensor in Aufbaurichtung vor der, für den Aufbau der späteren Schichten benötigten Energie abgeschirmt. Optional kann, nach dem Schliessen der Kavität in Aufbaurichtung, in Aufbaurichtung ein Kanal ausgebildet werden, von welchem, wegen des Schliessens in diese Richtung, kein Medium in die Kavität gelangen kann. Der Kanal kann z.B. in einem Abstand von 1mm oder weniger oberhalb der Kavität ausgebildet werden.

Auf diese Art kann mit einem generativen Herstellungsverfahren ein Sensor in eine Wand eines Werkstückes eingebettet werden. Das vorgestellte Verfahren ist nicht auf Sensor-Einbettungen für Ventilkörperelemente beschränkt, sondern kann auch dazu verwendet werden, in jedes andere, durch generative Herstellungsverfahren aufgebaute Werkstück Sensoren einzubetten. Das so aufgebaute Werkstück kann durch klassische Methoden nachbearbeitet werden. In ein Ventilkörperelement kann nachträglich z.B. noch ein oder mehrere Ventilsitze und ein oder mehrere Gewinde gefräst werden.

In einigen Varianten zur Herstellung einer Kombination aufweisend ein Ventilkörperelement und einen Sensor, z.B. einer in diesem Text beschriebenen Kombination, wird das Ventilkörperelement zumindest teilweise durch ein generatives Herstellungsverfahren schichtweise auf einer Grundplatte des Ventilkörperelementes aufgebaut. Dabei wird in einem ersten Schritt eine Wand schichtweise so aufgebaut, dass sich eine Kavität in der Wand ausbildet, wobei die Kavität in Aufbaurichtung ein, durch aufgebautes Material ausgebildetes Vordach aufweist. Das Vordach wird so ausgebildet, dass der Sensor unterhalb des Vordaches angeordnet werden kann, aber weiterhin aus der Aufbaurichtung in die Kavität eingegriffen werden kann, z. B. durch eine seitlich des Vordaches ausgesparte Öffnung. In einem zweiten Schritt wird der schichtweise Aufbau unterbrochen und der Sensor, z. B. durch eine seitlich des Vordaches ausgesparte Öffnung, unterhalb des Vordaches in die Kavität eingesetzt. Der Sensor ist so in Aufbaurichtung unter dem Vordach versteckt und so (z.B. vor einem Laser, welcher auf das Vordach neue Schichten aufschmilzt) geschützt. In einem dritten Schritt wird der schichtweise Aufbau fortgesetzt werden, z. B. so, dass nicht mehr aus der Aufbaurichtung in die Kavität eingegriffen werden kann. Die Kavität wird also in Aufbaurichtung verschlossen.
Optional kann in dem zweiten Schritt Pulver aus der Kavität abgesaugt werden.
In einigen Varianten kann die Kavität zwischen dem zweiten und dem dritten Schritt mit einem Füllmaterial gefüllt werden. Das Füllmaterial kann z. B. eine Paste (z.B. eine Wärmeleitpaste) oder ein Harz (z.B. ein Epoxidharz) sein. Das Füllmaterial kann z.B. auch eine seitlich des Vordaches ausgesparte Öffnung ausfüllen, und zum weiteren Generieren von Schichten kann Pulver auf das die ausgesparte Öffnung ausfüllende Füllmaterial aufgetragen werden.
In einigen Varianten wird die Kavität in dem dritten Schritt abgeschlossen, so dass die Kavität vollständig vom Ventilkörperelement umfasst ist. Da in eine abgeschlossene Kavität keine Kabel geführt werde können, kann ein in eine abgeschlossene Kavität eingebetteter Sensor dazu eingerichtet sein kabellos Daten übertragen zu können; und optional auch kabellose Daten empfangen zu können und/oder kabellos mit Energie versorgt werden zu können.
In einigen Varianten wird in dem ersten Schritt eine, sich an die Kavität anschliessende Kabelzuführung ausbildet und in dem zweiten Schritt ein an den Sensor angeschlossenes bzw. anschliessbares Kabel in die Kabelzuführung eingeführt. Die Kabelzuführung kann in dem dritten Schritt in Aufbaurichtung verschlossen werden. Die Kabelzuführung kann zu einer äusseren Oberfläche des Ventilkörpers führen.

In einigen Varianten ist die Kavität als ein, relativ zur Aufbaurichtung, schräger Stollen ausgebildet. Zum Beispiel kann der Winkel des schrägen Stollens relativ zur Aufbaurichtung 20° bis 70°, insbesondere ca. 40° bis 50°, betragen.

In einigen Varianten ist das Vordach maximal fünf Aufbauschichten, insbesondere maximal 4 Aufbauschichten, weiter insbesondere maximal 3 Aufbauschichten, dick.

In einigen Varianten ist das Vordach maximal 150 µm, insbesondere maximal 120 µm, weiter insbesondere maximal 90 µm, dick.

In einigen Varianten wird ein Kanal eines Ventilkörperelementes und/oder eines Ventils mittels Autofrettage behandelt. Dabei wird der Kanal einem, über der Streckgrenze liegenden Innendruck ausgesetzt, so dass Bereiche an der Innenwand plastifizieren. Durch Druckeigenspannungen an den höchstbelasteten Segmenten kann so die Festigkeit der Kanalwände gesteigert werden.

In einigen Varianten wird ein Ventilkörperelement isostatisch gepresst. Dadurch können z.B. eventuell vorhandene Poren und/oder Fehlstellen reduziert werden. Das Ventilkörperelement kann z.B. bei über 1000°C isostatisch gepresst werden. Durch die hohen Temperaturen können z. B. auch vom Herstellprozess herrührenden Eigenspannungen reduziert werden. Das Ventilkörperelement kann z.B. auch bei Raumtemperatur isostatisch gepresst werden.

In einigen Varianten wird ein Ventilkörperelement erst isostatisch gepresst und anschliessend mittels Autofrettage behandelt.

Die Daten eines oder mehrerer Sensoren können an eine optische Stellungsanzeige übermittelt werden, welche dazu eingerichtet sein kann Informationen bezüglich der Stellung eines Ventils optisch anzuzeigen. Eine solche optische Stellungsanzeige kann z.B. eine Signallampe und/oder ein Touchscreen eines Mobilgeräts sein.

Über eine drahtlose Schnittstelle kann ein eingebetteter Sensor Daten z.B. an ein Mobiltelefon übermitteln. Dadurch kann z.B. auch ein nur schwer zugängliches Ventil überwacht werden.

Ein Ventil mit eingebetteten Sensoren kann im Sinne des *"Internet*-of-*things"* und/oder der *"Industrie 4.0"* mit anderen Maschinen und/oder Anwendern vernetzt werden. Durch die Verwendung der verbesserten Ventilkörper mit eingebetteten Sensoren kann die Qualität der Messungen verbessert werden und das Ventil so in verbesserter und/oder verlässlicherer Art im Internet-of-things nutzbar sein.

Sensordaten über eine Ventilstellung können eine Fernüberwachung ermöglichen, z.B. über das Internet. Ein oder mehrere an einem Ventil angeordnete Sensoren können es erlauben aus der Ferne Rückschlüsse auf eine Ursache möglicher Probleme zu ziehen; und so aus der Ferne Gegenmassnahmen treffen und/oder instruieren zu können. Eingebettete Sensoren können eine besonders schnelle, präzise oder verlässliche Überwachung eines Ventils erlauben.

Eingebettete Sensoren können es erlauben Daten zu erheben, mit deren Hilfe auf eine eventuell nötige Wartungsfälligkeit geschlossen werden kann. Diese Daten können z. B. einzelne gemessene Parameter und/oder eine Zeitreihe von Parametern sein.

Das Ventil kann dazu eingerichtet sein in einer Wasserstofftankstelle verwendet zu werden.

Im Folgenden wird der Erfindungsgegenstand anhand von Ausführungsbeispielen, welche in den beiliegenden Zeichnungen dargestellt sind, näher erläutert. Es zeigen jeweils schematisch:
- Figur 1: ein Beispiel für eine Kavität zur Einbettung eines Sensors;
- Figur 2: ein weiteres Beispiel für eine Kavität für eine Einbettung eines Sensors;
- Figur 3: eine perspektivische Aufsicht auf ein Ventil mit zwei Kanaleingängen;
- Figur 4: eine grobe Skizze einer Verrohung eines Ventils mit zwei Kanaleingängen;
- Figur 5a: eine grobe Skizze zweier, in ein Ventil eingebetteter, kabelloser Sensoren;
- Figur 5b: eine grobe Skizze zweier, in ein Ventil eingebetteter, kabelverbundener Sensoren;
- Figur 6a: eine grobe Skizze eines ersten Ventilkörpers eines Sets mit drei Kanaleingängen;
- Figur 6b: eine grobe Skizze eines zweiten Ventilkörpers eines Sets mit drei Kanaleingängen;
- Figur 7a: eine grobe Skizze eines ersten Ventilkörpers eines Sets mit vier Kanaleingängen;
- Figur 7b: eine grobe Skizze eines zweiten Ventilkörpers eines Sets mit vier Kanaleingängen;
- Figur 7c: eine grobe Skizze eines dritten Ventilkörpers eines Sets mit vier Kanaleingängen.

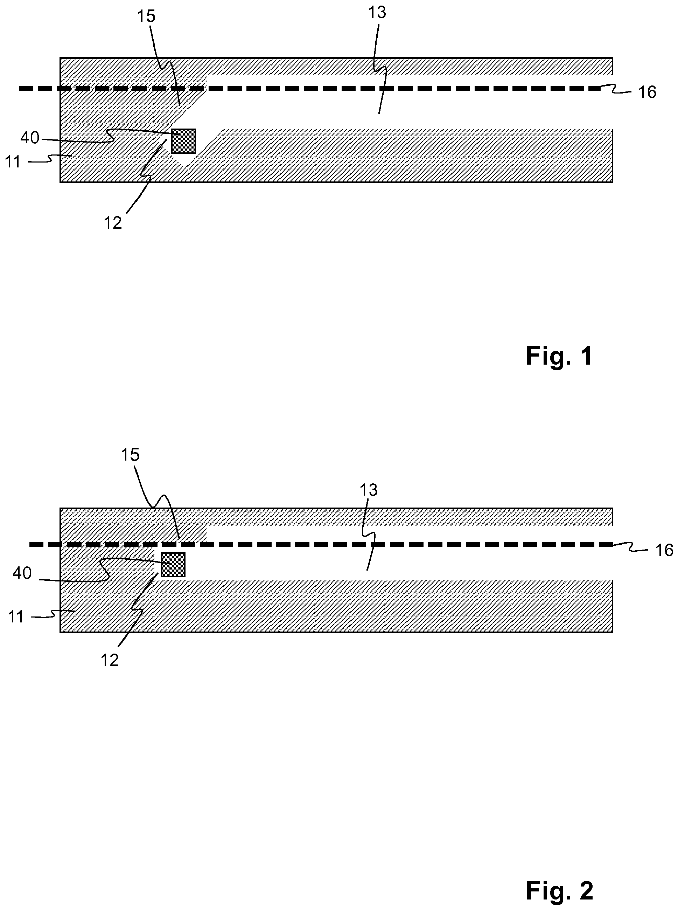

**Figur 1** zeigt schematisch ein Beispiel für eine Kavität 12 zur Einbettung eines Sensors 40.

In einem ersten Schritt wird ein Teil eines Werkstückes, z. B. eine Wand 11 eines Ventilkörperelementes, in welche der Sensor 40 nachher eingebettet werden soll, mit einem generativen Herstellungsverfahren, z. B. auf einer Grundplatte (nicht gezeigt), schichtweise aufgebaut. Dabei wird eine Kavität 12 ausgebildet, welche mit einem Vordach 15 versehen wird. In dem ersten Schritt wird das Werkstück 11 nur bis zu einer gewissen Unterbruchschicht 16 aufgebaut. Die Unterbruchschicht 16 ist so gewählt, dass das Vordach 15 bis zur Unterbruchschicht 16 so ausgebildet ist, dass der Sensor 40 bereits unterhalb des Vordaches 15 (also in Aufbaurichtung durch das Vordach 15 geschützt) angeordnet werden kann; aber gleichzeitig aus der Aufbaurichtung noch in die Kavität 12 eingegriffen werden kann. In dem in Figur 1 gezeigten Beispiel kann nach dem Aufbau bis zur Unterbruchschicht 16 noch von schräg oben, also am Vordach 15 vorbei, in die Kavität 12 eingegriffen werden.

In einem zweiten Schritt wird der schichtweise Aufbau an der Unterbruchschicht 16 unterbrochen und der Sensor 40 wird unterhalb des Vordaches 15 in die Kavität 12 eingesetzt.

In einem dritten Schritt wird der schichtweise Aufbau an der Unterbruchschicht 16 fortgesetzt. Beim weiteren Aufbau ist der Sensor 40 vor der für den Aufbau benötigten Energie durch das Vordach 15 geschützt. Bei dem weiteren Aufbau wird die Kavität in Aufbaurichtung verschlossen, so dass nicht mehr aus der Aufbaurichtung in die Kavität eingegriffen werden kann. Der Sensor 40 ist nun in dem Werkstück 11 eingebettet.

In dem in Figur 1 gezeigten Beispiel schliesst sich an die Kavität 12 noch eine Kabelzuführung 13 an, durch welche dem Sensor 40 ein Kabel (nicht gezeigt) zugeführt sein kann. Auch die Kabelzuführung 13 wird im dritten Schritt nach oben hin (also in Aufbaurichtung) verschlossen.

In dem in Figur 1 gezeigten Beispiel ist die Kavität 12 als - gegenüber der Aufbaurichtung - um ca. 45° abfallender Stollen ausgebildet. Auch andere Winkel, z. B. ein Winkel zwischen 40° bis 50°, sind denkbar. Die Stollendecke bildet das den Sensor 40 schützende Vordach 15 aus. In dem gezeigten Querschnitt bildet das Vordach 15 mit der Unterbruchschicht 16 einen Keil aus.

**Figur 2** zeigt ein weiteres Beispiel für eine mögliche Kavität 12 zur Einbettung eines Sensors 40. In diesem Beispiel ist die Kavität 12 als zur Schichtung paralleler Schacht ausgebildet, welcher bis zur Unterbruchschicht 16 von einem dünnen (z.B. nur 3 Schichten dicken), zur Schichtung parallelen Vordach 15 geschützt wird.

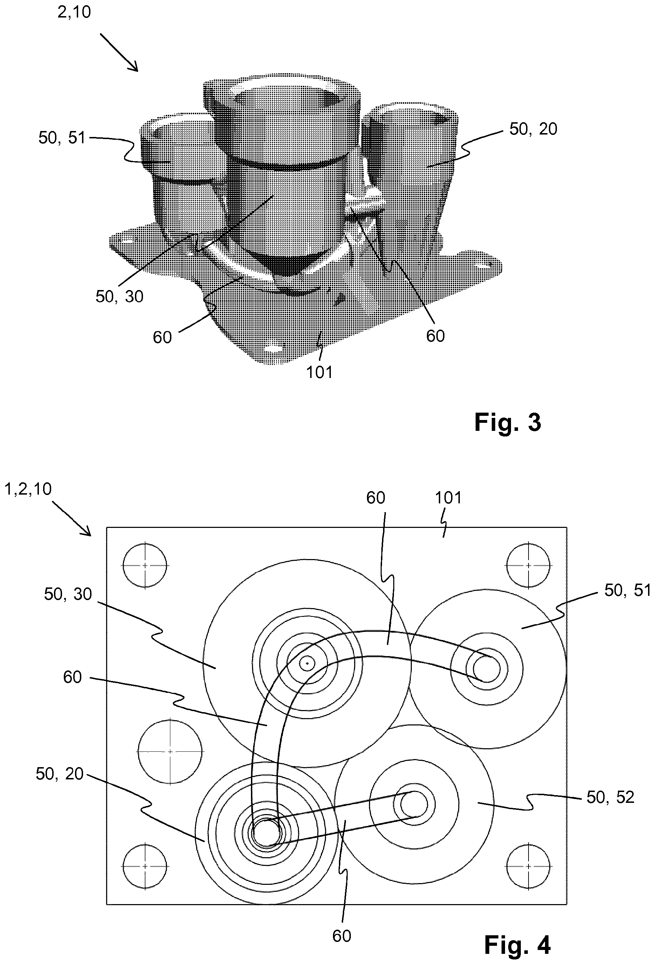

**Figur 3** zeigt eine perspektivische Aufsicht auf einen Ventilkörper 2 mit vier Eingängen (in der Figur sind nur drei Eingänge sichtbar; ein weiter Eingang ist in der gezeigten Perspektive durch einem der anderen Eingänge verdeckt). In dem gezeigten Beispiel besteht der Ventilkörper 2 aus einem einzigen, auf einer Grundplatte 101 aufgebauten Ventilkörperelement 10. Ein erster Eingang 50 ist für das Hauptventil 20 und ein zweiter Eingang 50 für das Pilotventil 30 vorgesehen. Ein dritter Eingang 50 ist als Kanaleingang, genauer gesagt als Abfluss 51, vorgesehen. Der vierte Eingang ist als Zufluss eingerichtet, wird in der gezeigten Darstellung aber durch das Pilotventil 30 verdeckt. Bei Öffnung des Pilotventils 30 werden die Druckverhältnisse am Hauptventil 20 geändert, wodurch sich dieses öffnet und ein Medium durch verbindende Rohre 60 von dem Zufluss zu dem Abfluss strömen kann.

**Figur 4** zeigt ein Schema einer Verrohrung der Eingänge 50 eines Ventils 1 bzw. eines Ventilkörpers 2 (bzw. eines Ventilkörperelementes 10) mit zwei Kanaleingängen. Das in Figur 4 gezeigte Schema und die in den nachfolgenden Figuren gezeigten Schemata sind nicht als Querschnitt, sondern als grobe Skizze der Verrohrung der Eingänge zu verstehen. Die eingezeichneten Rohre 60 stellen nicht einen tatsächlichen Rohrverlauf dar, sondern deuten die Existenz einer Rohrverbindung zwischen dem Hauptventil und den jeweiligen Zu- und Abflüssen an.

In dem in Figur 4 gezeigten Beispiel ist ein als Zufluss 52 ausgebildeter Kanaleingang 50 mittels Rohren 60 an das Hauptventil 20 verrohrt. Ein weiterer Kanaleingang 50 ist als Abfluss 51 angeordnet und ebenfalls an das Hauptventil verrohrt. Das Pilotventil 30 ist nicht direkt sondern nur über zwei Drosseln (hier nicht dargestellt) mit dem Abfluss und dem Hauptventil verbunden.

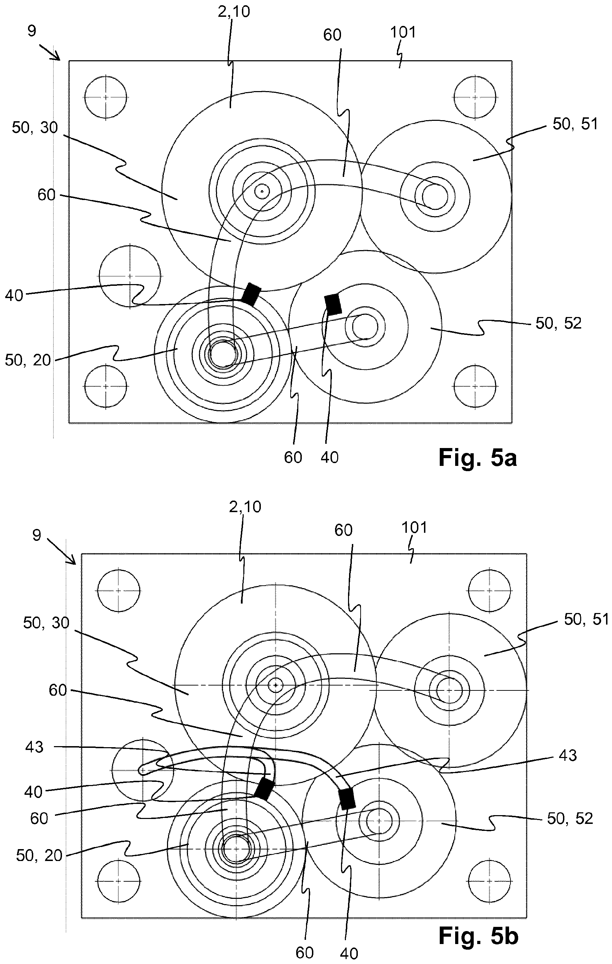

**Figur 5a** zeigt ein Schema einer Kombination 9 aufweisend ein Ventilkörperelement 10 und mindestens einen Sensor 40. In dem gezeigten Beispiel weist die Kombination zwei Sensoren 40 auf. Ein erster Sensor 40 ist an einem Rohr 60 angeordnet, welches einen Zufluss 52 mit dem Hauptventil 20 verbindet. Mit anderen Worten ist der erste Sensor 40 - in Flussrichtung - kurz vor dem Hauptventil 20 angeordnet. Ein zweiter Sensor 40 ist an einem Rohr 60 angeordnet, welches das Hauptventil 20 mit einem Abfluss 51 verbindet. Mit anderen Worten ist der zweite Sensor 40 - in Flussrichtung - kurz nach dem Hauptventil 20 angeordnet. Wenn z. B. beide Sensoren 40 dazu eingerichtet sind einen gleichen bzw. einen ähnlichen Parameter zu erfassen, kann durch eine solche Sensor-Anordnung der Parameter kurz vor dem Hauptventil 20 und kurz nach dem Hauptventil 20 miteinander verglichen werden, wodurch Rückschlüsse auf die Ventilstellung und/oder den Ventildurchfluss möglich sein können.

In dem gezeigten Beispiel sind die Sensoren 40 als kabellose Sensoren ausgebildet. Die Sensoren 40 können z.B. dazu eingerichtet sein induktiv Daten zu übertragen und - optional - induktiv mit Energie gespeist zu werden.

**Figur 5b** zeigt ein Schema einer Kombination 9 ähnlich der aus Figur 5a, wobei - im Unterschied zu Figur 5a - in Figur 5b die Sensoren 40 kabelverbunden sind. Jedem der beiden gezeigten Sensoren 40 ist mit einem Kabel 43 verbunden. Der Ventilkörper 2 kann Kabelzuführungen aufweisen, in welche die Kabel 43 eingebettet sind. Die Kabel 43 können zu einem Ausgang aus dem Ventilkörper 2 geführt sein. Die Kabel 43 können mit anderen Objekten (nicht gezeigt), wie z. B. Stromquellen, Datenspeichereinheiten, Auswertungseinheiten und/oder Datenübermittlungseinheiten, verbunden sein.

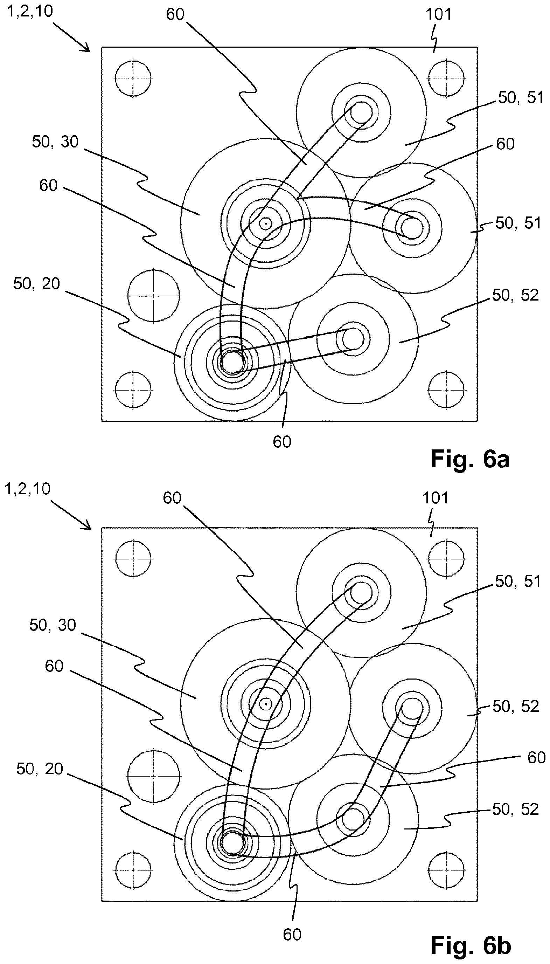

**Figur 6a** zeigt ein Schema eines ersten Ventils 1 bzw. eines ersten Ventilkörpers 2 eines Sets. Der Ventilkörper 2 kann aus einem oder mehr Ventilkörperelementen 10 aufgebaut sein. Der Ventilkörper 2 weist eine Grundplatte 101 auf, auf welcher die Ventilkörperstrukturen - zumindest teilweise - durch ein generatives Herstellungsverfahren, worden ist. Der gezeigte Ventilkörper 2 weist insgesamt fünf Eingänge auf: einen für ein Hauptventil 20, einen für ein Pilotventil 30 sowie drei Eingänge 50 für Kanäle. Die Eingänge 50 sind, wie sie in Figur 6a rein schematisch dargestellt ist, durch Rohrleitungen 60 miteinander verbunden.

In dem in Figur 6a gezeigten Beispiel ist ein Eingang 50 als Zufluss 52 angeordnet und an das Hauptventil 20 verrohrt. Das Hauptventil 20 ist an zwei als Abflüsse 52 angeordnete Eingänge 50 verrohrt. Das Ventil 1 weist also einen Zufluss 52 und zwei Abflüsse 51 auf.

**Figur 6b** zeigt ein Schema eines zweiten Ventils 1 bzw. eines zweiten Ventilkörpers 2 aus demselben Set wie das Beispiel von Figur 6a. Die Grundplatte 101 des ersten Ventilkörpers 2 aus Figur 6a und die Grundplatte 101 des zweiten Ventilkörpers 2 aus Figur 6b weisen dieselbe Geometrie (also dieselbe räumliche Ausgestaltung) auf und haben dieselben Abmessungen. Genau wie der erste Ventilkörper 2, weist der zweite Ventilkörper 2 insgesamt fünf Eingänge 50 auf, von denen je einer für das Hauptventil 20 und das Pilotventil 30, sowie drei für Kanäle vorgesehen sind. Die Eingänge 50 des ersten Ventilkörpers 2 und des zweiten Ventilkörpers 2 sind - relativ zur jeweiligen Grundplatte 101 - an denselben Positionen angeordnet und weisen dieselben Geometrien auf. Jedoch weist der zweite Ventilkörper 2 eine andere Verrohrung als der erste Ventilkörper 2 auf. Bei dem zweiten Ventilkörper 2 sind durch die Verrohrung zwei Eingänge 50 als Zuflüsse 52 und ein Eingang 50 als Abfluss 51 ausgebildet.

Die Geometrie der Grundplatte 101 sowie Anzahl, Positionen und Geometrien der Eingänge 50 des ersten Ventilkörpers 2 und des zweiten Ventilkörpers 2 sind also identisch; die beiden Ventilkörper 2 unterscheiden sich nur in der Verrohrung, welche z. B. Einfluss auf die Anzahl der Zuflüsse 51 bzw. der Abflüsse 52 haben kann.

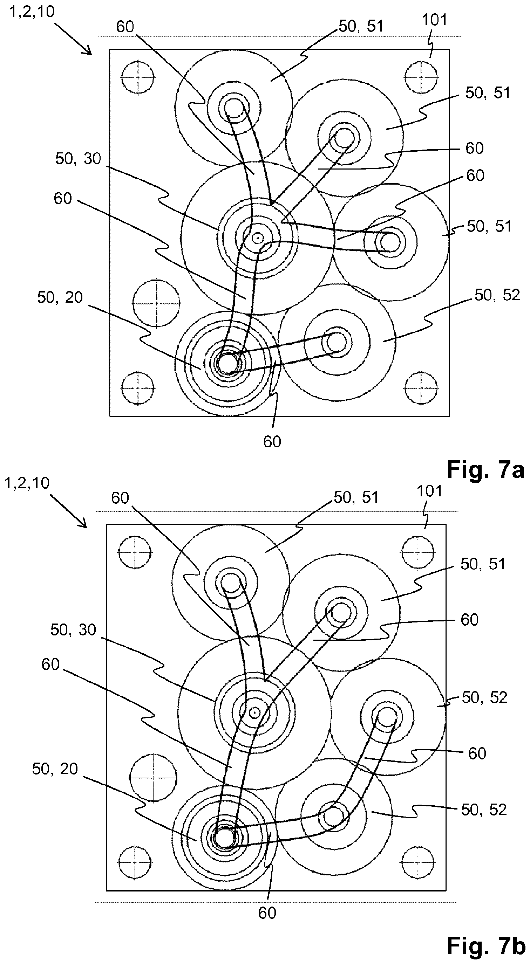

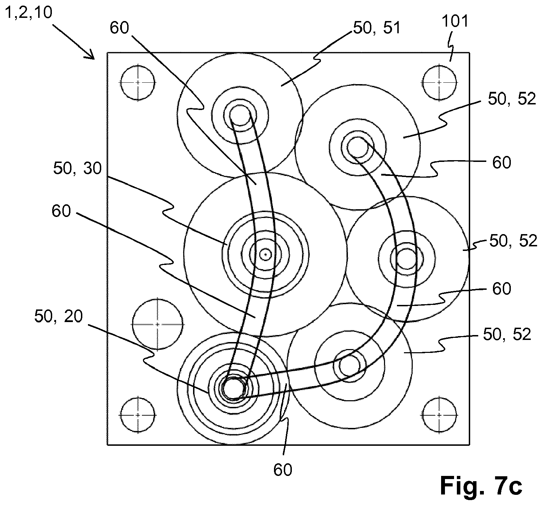

**Figur 7a** zeigt ein Schema eines ersten Ventilkörpers 2, **Figur 7b** ein Schema eines zweiten Ventilkörpers 2 und **Figur 7c** ein Schema eines dritten Ventilkörpers 2 eines Sets. Alle drei Ventilkörper 2 weisen eine gleich ausgebildete Grundplatte 101 und darauf je sechs Eingänge 50 auf, wobei die sechs Eingänge 50 jeweils gleich angeordnet sind und je ein Eingang 50 für ein Hauptventil 20 bzw. für ein Pilotventil 30 vorgesehen sind. Die drei Ventilkörper 2 des Sets unterscheiden sich jedoch in ihrer Verrohrung.

Die Verrohrung des in Figur 7a gezeigten Ventilkörpers 2 ist so ausgebildet, dass der Ventilkörper 2 einen Zufluss 52 sowie drei Abflüsse 51 aufweist.

Die Verrohrung des in Figur 7b gezeigten Ventilkörpers 2 ist so ausgebildet, dass der Ventilkörper 2 zwei Zuflüsse 52 sowie zwei Abflüsse 51 aufweist.

Die Verrohrung des in Figur 7c gezeigten Ventilkörpers 2 ist so ausgebildet, dass der Ventilkörper 2 drei Zuflüsse 52 sowie einen einzigen Abfluss 51 aufweist.

Die Ventilkörper 2 des Sets unterscheiden sich also lediglich in ihrer Verrohrung. Insbesondere kann aus den Ventilkörpern 2 des Sets mit der gleichen Maschinerie und mit den gleichen Komponenten (die gleichen Ventilverschlüsse, Magnete etc.) Ventile gebaut werden. Die Schnittstellen der Kanaleingänge der so gebauten Ventile sind gleich ausgebildet und so kann ein Ventil des Sets leicht durch ein anderes Ventil des Sets ausgetauscht werden, z. B. wenn die Schaltung des Ventils geändert werden soll.

## Patentansprüche

1. Kombination (9), als Teil eines Ventils (1), aufweisend
- ein Ventilkörperelement (10) und
- einen Sensor (40),
wobei
- das Ventilkörperelement (10) einstückig ausgebildet ist,
- das Ventilkörperelement (10) zumindest teilweise durch ein generatives Herstellungsverfahren schichtweise aufgebaut worden ist,
- das Ventilkörperelement (10) eine Wand (11) aufweist, und
- der Sensor (40) in die Wand (11) eingebettet ist
und wobei das Ventil (1) aufweist
- einen Ventilsitz,
- einen Ventilverschluss, und
- zwei oder mehr Kanäle,
**dadurch gekennzeichnet, dass**
- ein erster eingebetteter Sensor (40) an einem ersten Kanal angeordnet ist, und
- ein zweiter eingebetteter Sensor (40) an einem zweiten Kanal angeordnet ist,
wobei der erste Kanal und der zweite Kanal auf unterschiedlichen Seiten des Ventilsitzes angeordnet sind, und
wobei die beiden Sensoren (40) zur Erfassung einer Temperatur eingerichtet sind.

2. Kombination (9) gemäss Anspruch 1, wobei
- die Wand (11) eine Kavität (12) aufweist,
- die Kavität (12) von einer kanalbildenden Innenseite des Ventilkörperelementes (10) getrennt ist, und
- der eingebettete Sensor (40) in der Kavität (12) angeordnet ist.

3. Kombination (9) gemäss Anspruch 2, wobei
- die Kavität (12) eine abgeschlossene Kavität (12) ist, und
- der eingebettete Sensor (40) Mittel zur kabellosen Übertragung aufweist.

4. Kombination (9) gemäss Anspruch 2, wobei
- an die Kavität (12) eine Kabelzuführung (13) anschliesst,
- der eingebettete Sensor (40) an ein Kabel (43) angeschlossen ist, und
- das Kabel (43) durch die Kabelzuführung (13) geführt ist.

5. Kombination (9) gemäss einem der vorstehenden Ansprüche, wobei
- der eingebettete Sensor (40) weniger als 1.5 mm von einer kanalbildenden Innenseite des Ventilkörperelementes (10) entfernt angeordnet ist.

6. Kombination (9) gemäss Anspruch 1, wobei
- der Ventilverschluss einen Magneten aufweist,
- der eingebettete Sensor (40) als Hall-Sensor ausgebildet ist, und
- der Hall-Sensor dazu eingerichtet ist, eine Position des Magneten zu erfassen.

7. Set, aufweisend einen ersten und einen zweiten Ventilkörper (2), aufweisend eine Kombination (9) gemäss einem der Ansprüche 1 bis 6, wobei
- der erste und der zweite Ventilkörper (2) jeweils eine Grundplatte (101) mit identischer Geometrie aufweisen, auf welcher der erste und der zweite Ventilkörper (2) zumindest teilweise durch ein generatives Herstellungsverfahren aufgebaut sind,
- der erste und der zweite Ventilkörper (2) jeweils vier oder mehr Eingänge (50) aufweisen, nämlich einen Eingang (50) für ein Pilotventil (30), einen Eingang (50) für ein Hauptventil (20) sowie zwei oder mehr Eingänge (50) für Kanäle,
- der erste und der zweite Ventilkörper (2) jeweils dieselbe Anzahl Eingänge (50) aufweisen, und
- die Eingänge (50) des ersten Ventilkörpers (2) und des zweiten Ventilkörpers (2) relativ zur jeweiligen Grundplatte (101) dieselben Positionen und Geometrien aufweisen; und
- die Eingänge (50) des ersten Ventilkörpers (2) und des zweiten Ventilkörpers (2) jeweils unterschiedlich miteinander verbunden sind.

8. Set gemäss Anspruch 7, wobei die Eingänge (50) des ersten Ventilkörpers (2) und des zweiten Ventilkörpers (2) jeweils durch ein generatives Herstellungsverfahren unterschiedlich miteinander verbunden wurden.

9. Verfahren zur Herstellung einer Kombination (9) aufweisend ein Ventilkörperelement (10) und einen Sensor (40),
bevorzugt gemäss einer Kombination (9) nach einem der Ansprüche 1 bis 6,
wobei das Ventilkörperelement (10) zumindest teilweise durch ein generatives Herstellungsverfahren schichtweise auf einer Grundplatte des Ventilkörperelementes (10) aufgebaut wird, wobei
- in einem ersten Schritt eine Wand (11) schichtweise so aufgebaut wird, dass sich eine Kavität (12) in der Wand (11) ausbildet, wobei
∘ die Kavität (12) in Aufbaurichtung ein durch aufgebautes Material ausgebildetes Vordach (15) aufweist, wobei das Vordach (15) so ausgebildet ist, dass der Sensor (40) unterhalb des Vordaches (15) angeordnet werden kann, und
∘ aus der Aufbaurichtung in die Kavität (12) eingegriffen werden kann,
- in einem zweiten Schritt der schichtweise Aufbau unterbrochen und der Sensor (40) unterhalb des Vordaches (15) in die Kavität (12) eingesetzt wird,
- in einem dritten Schritt der schichtweise Aufbau so fortgesetzt wird, dass nicht mehr aus der Aufbaurichtung in die Kavität (12) eingegriffen werden kann.

10. Verfahren gemäss Anspruch 9, wobei zwischen dem zweiten und dem dritten Schritt die Kavität (12) mit einem Füllmaterial gefüllt wird, insbesondere wobei das Füllmaterial als Paste oder Harz ausgebildet ist.

11. Verfahren gemäss einem der Ansprüche 9 oder 10, wobei die Kavität (12) im dritten Schritt abgeschlossen wird.

12. Verfahren gemäss einem der Ansprüche 9 oder 10, wobei
- in dem ersten Schritt eine sich an die Kavität (12) anschliessende Kabelzuführung (13) ausgebildet wird, und
- in dem zweiten Schritt ein an den Sensor (40) angeschlossenes Kabel (43) in die Kabelzuführung (13) eingeführt wird.

13. Verfahren gemäss einem der Ansprüche 9 bis 12, wobei die Kavität (12) als ein, relativ zur Aufbaurichtung, schräger Stollen ausgebildet ist.

## Claims

1. A combination (9), as part of a valve (1), comprising
- a valve body element (10) and
- a sensor (40),
wherein
- the valve body element (10) is designed as one piece,
- the valve body element (10) has been built up in a layered manner at least partly by way of a generative manufacturing method,
- the valve body element (10) comprises a wall (11), and
- the sensor (40) is embedded into the wall (11)
and wherein the valve (1) comprises
- a valve seat,
- a valve closure and
- two or more channels,
**characterised in that**
- a first embedded sensor (40) is arranged on a first channel and
- a second embedded sensor (40) is arranged on a second channel,
wherein the first channel and the second channel are arranged on different sides of the valve seat, and
wherein both sensors (40) are configured for detecting a temperature.

2. A combination (9) according to claim 1, wherein
- the wall (11) comprises a cavity (12),
- the cavity (12) is separated from a channel-forming inner side of the valve body element (10), and
- the embedded sensor (40) is arranged in the cavity (12).

3. A combination (9) according to claim 2, wherein
- the cavity (12) is a closed-off cavity (12), and
- the embedded sensor (40) comprises means for cable-free transmission.

4. A combination (9) according to claim 2, wherein
- a cable feed (13) connects onto the cavity (12),
- the embedded sensor (40) is connected to a cable (43), and
- the cable (43) is led through the cable feed (13).

5. A combination (9) according to one of the preceding claims, wherein
- the embedded sensor (40) is arranged at a distance of less than 1.5 mm from a channel-forming inner side of the valve body element (10).

6. A combination (9) according to claim 1, wherein
- the valve closure comprises a magnet,
- the embedded sensor (40) is designed as a Hall sensor, and
- the Hall sensor is configured to detect a position of the magnet.

7. A set, comprising a first and a second valve body (2), comprising a combination (9) according to one of the claims 1 to 6, wherein
- the first and the second valve body (2) each comprise a base plate (101) with an identical geometry, on which base plate the first and the second valve body (2) are built up at least partly by way of a generative manufacturing method,
- the first and the second valve body (2) each comprise four or more inlets (50), specifically an inlet (50) for a pilot valve (30), an inlet (50) for a main valve (20) as well as two or more inlets (50) for channels,
- the first and the second valve body (2) each have the same number of inlets (50), and
- the inlets (50) of the first valve body (2) and of the second valve body (2) have the same positions and geometries relative to the respective base plate (101); and
- the inlets (50) of the first valve body (2) and of the second valve body (2) are each connected to one another differently.

8. A set according to claim 7, wherein the inlets (50) of the first valve body (2) and of the second valve body (2) have each been differently connected to one another by way of a generative manufacturing method.

9. A method for manufacturing a combination (9) comprising a valve body element (10) and a sensor (40),
preferably according to a combination (9) of one of the claims 1 to 6,
wherein the valve body element (10) is constructed in a layered manner on a base plate of the valve body element (10) at least partly by way of a generative manufacturing method, wherein
- in a first step a wall (11) is built up in a layered manner such that a cavity (12) forms in the wall (11), wherein
° the cavity (12) in the build-up direction comprises a projecting roof which is formed by built-up material, wherein the projecting roof (15) is designed such that the sensor (40) can be arranged below the projecting roof (15), and
° one can engage into the cavity (12) from the build-up direction,
- in a second step the layerwise build-up is interrupted and the sensor (40) is inserted into the cavity (12) below the projecting roof (15),
- in a third step the layerwise build-up is continued such that one can no longer engage into the cavity (12) from the build-up direction.

10. A method according to claim 9, wherein the cavity (12) is filled with a filling material between the second and the third step, in particular wherein the filling material is designed as paste or resin.

11. A method according to one of the claims 9 to 10, wherein the cavity (12) is closed off in the third step.

12. A method according to one of the claims 9 or 10, wherein
- in the first step, a cable feed (13) which connects onto the cavity (12) is formed, and
- in the second step, a cable (43) which is connected onto the sensor (40) is introduced into the cable feed (13).

13. A method according to one of the claims 9 to 12, wherein the cavity (12) is designed as a tunnel which is slanted relative to the build-up direction.

## Revendications

1. Ensemble (9) faisant partie d'une soupape (1) et comprenant :
- un élément (10) de corps de soupape et
- un capteur (40),
dans lequel
- l'élément (10) de corps de soupape est formé d'un seul tenant,
- au moins une partie de l'élément (10) de corps de soupape a été construite par couches successives dans une opération de fabrication par addition de matière,
- l'élément (10) de corps de soupape présente une paroi (11) et
- le capteur (40) est intégré dans la paroi (11),
et dans lequel la soupape (1) présente :
- un siège de soupape,
- une fermeture de soupape et
- deux ou plusieurs canaux,
**caractérisé en ce que**
- un premier capteur (40) intégré est disposé contre un premier canal et
- un deuxième capteur (40) intégré est disposé contre un deuxième canal,
**en ce que** le premier et le deuxième canal sont disposés sur des côtés différents du siège de soupape et
**en ce que** les deux capteurs (40) sont conçus pour saisir une température.

2. Ensemble (9) selon la revendication 1, dans lequel
- la paroi (11) présente une cavité (12),
- la cavité (12) est séparée du côté intérieur, formant le canal, de l'élément (10) de corps de soupape et
- le capteur (40) intégré est disposé dans la cavité (12) .

3. Ensemble (9) selon la revendication 2, dans lequel
- la cavité (12) est une cavité (12) fermée et
- le capteur (40) intégré présente des moyens de transmission sans fil.

4. Ensemble (9) selon la revendication 2, dans lequel
- un guide de câble (13) se raccorde à la cavité (12),
- le capteur (40) intégré est raccordé à un câble (43) et
- le câble (43) passe dans le guide de câble (13) .

5. Ensemble (9) selon une des revendications précédentes, dans lequel
- le capteur (40) intégré est disposé à une distance de moins de 1,5 mm du côté intérieur, formant le canal, de l'élément (10) de corps de soupape.

6. Ensemble (9) selon la revendication 1, dans lequel
- la fermeture de soupape présente un aimant,
- le capteur (40) intégré est configuré comme capteur de Hall et
- le capteur de Hall est conçu pour déterminer la position de l'aimant.

7. Trousse constituée d'un premier et d'un deuxième corps de soupape (2), présentant un ensemble (9) selon l'une des revendications 1 à 6 et dans laquelle
- le premier et le deuxième corps de soupape (2) présentent chacun une plaque de base (101) de même géométrie sur laquelle au moins une partie du premier et du deuxième corps de soupape (2) est construite par une opération de fabrication par addition de matière,
- le premier et le deuxième corps de soupape (2) présentent chacun quatre entrées (50) ou plus, à savoir une entrée (50) pour une soupape pilote (30), une entrée (50) pour une soupape principale (20) et deux ou plusieurs entrées (50) pour des canaux,
- le premier et le deuxième corps de soupape (2) présentent chacun le même nombre d'entrées (50),
- les entrées (50) du premier corps de soupape (2) et du deuxième corps de soupape (2) présentent la même géométrie et la même position par rapport à leur plaque de base (101) respective et
- les entrées du premier et du deuxième corps de soupape (2) sont reliées l'une à l'autre de manières différentes.

8. Trousse selon la revendication 7, dans laquelle les entrées (50) du premier et du deuxième corps de soupape (2) sont reliées l'une à l'autre de manières différentes par une opération de fabrication par addition de matière.

9. Procédé de fabrication d'un ensemble (9) comprenant un élément (10) de corps de soupape et un capteur (40), de préférence d'un ensemble (9) selon l'une des revendications 1 à 6,
au moins une partie de l'élément (10) de corps de soupape étant formée par couches successives sur une plaque de base de l'élément (10) de corps de soupape dans une opération de fabrication par addition de matière telle que
dans une première étape, une paroi (11) est formée par couches successives de telle sorte qu'une cavité (12) se forme dans la paroi (11) et
- la cavité (12) présentant dans la direction de dépôt de matière un avant-toit (15) formé par la matière déposée, l'avant-toit (15) étant formé de telle sorte que le capteur (40) puisse être disposé en dessous de l'avant-toit (15) et
- un accès à la cavité (12) hors de la direction de dépôt de matière soit rendu possible,
dans une deuxième étape, le dépôt de couches successives est interrompu et le capteur (40) est placé dans la cavité (12) en dessous de l'avant-toit (15) et
dans une troisième étape le dépôt de couches successives est repris de telle sorte qu'aucun accès à la cavité (12) hors de la direction de dépôt de matière ne soit plus possible.

10. Procédé selon la revendication 9, dans lequel entre la première et la troisième étape, la cavité (12) est remplie d'un matériau de remplissage, le matériau de remplissage étant une pâte ou une résine.

11. Procédé selon l'une des revendications 9 ou 10, dans lequel la cavité (12) est fermée au cours de la troisième étape.

12. Procédé selon l'une des revendications 9 ou 10, dans lequel
- au cours de la première étape, un guide de câble (13) se raccordant à la cavité (12) est formé et
- au cours de la deuxième étape, un câble (43) raccordé au capteur (40) est introduit dans le guide de câble (13).

13. Procédé selon l'une des revendications 9 à 12, dans lequel la cavité (12) est configurée comme galerie inclinée par rapport à la direction du dépôt de matière.
